# EUROPEAN PATENT APPLICATION

(11) **EP 4 718 753 A1**
(43) Date of publication of application: **01.04.2026**
(21) Application number: 24203195.3
(22) Date of filing: 27.09.2024
(51) Int. Cl.: H04L 1/00, H04L 5/00

(54) **ADAPTIVE POWER BOOSTING**

(71) Applicant: Vestel Elektronik Sanayi ve Ticaret A.S., 45030 Manisa (TR)
(72) Inventor: ABIDRABBU, Shaima, 45030 Manisa (TR); ALI, Sawaira Rafaqat, 45030 Manisa (TR); AHMED MADNI, Haji Muhammad Furqan, 45030 Manisa (TR); ARSLAN, Hüseyin, 45030 Manisa (TR)
(74) Representative: Grünecker Patent- und Rechtsanwälte PartG mbB

(57) **Abstract**

Some embodiments in the present disclosure relate to adaptive power boosting in wireless communication networks. In particular, an access point and a wireless communication entity is provided. The access point comprises a transceiver configured to transmit a trigger frame including scheduling information to a wireless communication entity and to receive a message from the wireless communication entity, for determining a range from the wireless communication entity to the access point, entity characteristics, and/or Quality of Service, QoS, requirements. The access point further comprises processing circuitry configured to determine the range, the entity characteristics, and/or the QoS requirements using the message received from the wireless communication entity and to determine a distributed-tone resource unit, dRU, including a plurality of sub-carriers distributed over a bandwidth, according to the determined range, entity characteristics, and/or QoS requirements. The transceiver is further configured to transmit a dRU indication indicating the dRU to the wireless communication entity.

## Description

The present disclosure relates to adaptive power boosting in wireless communication. In particular, the present disclosure provides methods and apparatuses for such wireless applications.

### BACKGROUND

Wireless communication has been advancing over several decades now. Exemplary notable standards organizations include the 3rd Generation Partnership Project (3GPP) and IEEE 802.11, commonly referred to as Wi-Fi.

Flexibility and adaptivity have been desired since the beginning of wireless communication systems. For example, flexible signaling with link adaptation techniques (adaptive modulation and coding, and power control) has been aimed at in the second generation (2G) standardization of wireless cellular systems. Besides that, in Long Term Evolution-Advanced (LTE-A), depending on the cell size, orthogonal frequency division multiplexing (OFDM) symbols are designed with either normal cyclic prefix (CP) or extended CP. Also, to support a wide variety of communication applications, waveform flexibility is extended to additional parameters' flexibility such as subcarrier spacing in fifth generation (5G) standardization of New Radio (NR), where depending on the channel conditions and the communication service (enhanced mobile broadband (eMBB), massive machine type communications (mMTC), ultra-reliable low latency communications (URLLC)) required, the most suitable numerology is selected. Similarly, wireless local area network (WLAN) standards have incorporated radio environment maps to provide awareness of the radio environment network and have developed standards such as the 802.22 for cognitive radios (CRs) and European Telecommunications Standards Institute's (ETSI) re-configurable radio systems (RRS). Both of these standards bring flexibility and adaptivity to WLAN systems to improve communication performance in dynamic conditions.

For better connectivity and performance, the Wi-Fi band has been diversified by incorporating 6 GHz in addition to 2.4 GHz and 5 GHz bands.

The 6 Ghz spectrum has been open for Wi-Fi since 11ax and opens several opportunities such as high capacity, higher speed and low latency. However, in the 6 GHz band there are two main power modes, namely Standard Power (SP) and Low Power Indoor (LPI)

The SP mode supports outdoor and indoor operations, where for the SP access points (APs), it is required to operate with automated frequency control (AFC), to mitigate 6 Ghz Wi-Fi from interfering with incumbent services such as public safety and cellular backhaul, microwave links, satellite services, and TV broadcast services. However, AFC may not be always available due to AFC server/operator down/offline. On the other hand, LPI can cover a broad class of indoor products that do not require the cost of AFC implementation.

However, Federal Communication Commission (FCC) requirements for Low-Power Indoor (LPI) applications are much stricter than those for the 2.4 GHz and 5 GHz bands. For example, the equivalent isotropic radiated power (EIRP) limit is 5 dBm/MHz for an access point (AP) in the 6 GHz LPI band, compared to 17 dBm/MHz for APs in the 5 GHz band. Similarly, the EIRP limit is -1 dBm/MHz for non-AP devices in the 6 GHz LPI band, versus 11 dBm/MHz for non-AP devices in the 5 GHz band. In other words, there is a strict limitation in terms of power spectral density (PSD) basis in the 6 GHz band.

The power spectral density, PSD, limits can undesirably reduce the range of wireless communications, may reduce packet detection and channel estimation capabilities of APs and stations (STAs).

Efficient utilization of the 6 GHz spectrum and achieving reliable communication in the 6 GHz band is one of the key objectives for 11 bn ultra-high reliability (UHR) system in Wi-Fi networks. Also, in the project authorization request (PAR) discussion, rate versus range enhancement has been highlighted as an important feature of UHR. Therefore, if the PSD limitations can be overcome, the transmit power may be enhanced, and therefore the spectrum efficiency could be improved and/or the range might be extended.

### SUMMARY

Methods and techniques, as well as the corresponding devices are provided, facilitating adaptive power boosting in wireless communication systems.

The present disclosure may improve network efficiency and performance, which are key considerations in the development of wireless communication standards. By addressing these critical aspects, the disclosure contributes to the overall advancement and optimization of wireless networks.

The invention is defined by the independent claims. Some exemplary implementations are provided by the dependent claims.

In some exemplary implementations, an access point, AP, is provided. The AP comprises a transceiver configured to transmit a trigger frame including scheduling information to a wireless communication entity; and to receive a message from the wireless communication entity, for determining a range from the wireless communication entity to the AP, entity characteristics, and/or Quality of Service, QoS, requirements. The AP further comprises processing circuitry configured to determine the range, the entity characteristics, and/or the QoS requirements using the message received from the wireless communication entity; and to determine a distributed-tone resource unit, dRU, including a plurality of sub-carriers distributed over a bandwidth, according to the determined range, entity characteristics, and/or QoS requirements. The transceiver is further configured to transmit a dRU indication indicating the dRU to the wireless communication entity.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter.

Further, although the described apparatuses and methods are primarily centered around certain radio access technologies and network structures like Wi-Fi, the proposed ideas and their variations can also be extended to other technologies and networks, including, for example, Bluetooth, ZigBee, 5G/New Radio (NR), Long-Term Evolution (LTE), LTE-Advanced, LTE-Advanced Pro, Internet of Things (IoT), Industrial loT (IIoT), and narrowband loT (NB-loT). Therefore, the scope of this disclosure is not confined to the given examples.

### BRIEF DESCRIPTION OF DRAWINGS

An understanding of the nature and advantages of various embodiments may be realized by reference to the following figures.
- Fig. 1: is a block diagram illustrating a basic communication system;
- Fig. 2: illustrates a system model of a wireless communication system, to which embodiments of the present disclosure may be applied;
- Fig. 3: shows a high-level resource unit formation in a 40 MHz channel for dRU or rRU;
- FIG. 4a: is a block diagram illustrating a configuration of an access point according to an embodiment;
- Fig. 4b: is a block diagram illustrating a configuration of a wireless communication entity according to an embodiment;
- Fig. 5a: illustrates the steps of a method for an access point according to an embodiment and its interplay with the steps of a method for a wireless communication entity as illustrated in Fig. 5b;
- Fig. 5b: illustrates the steps of a method for a wireless communication entity according to an embodiment and its interplay with the steps of a method for an access point as illustrated in Fig. 5a;
- Fig. 6: illustrates the steps of a method according to a specific implementation of an embodiment;
- Fig. 7: illustrates the combination of dRUs for a wireless communication entity at a further range;
- Fig. 8: illustrates the combination of dRUs for a wireless communication entity at a nearer range; and
- Fig. 9: illustrates an embodiment supporting an ON/OFF approach.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

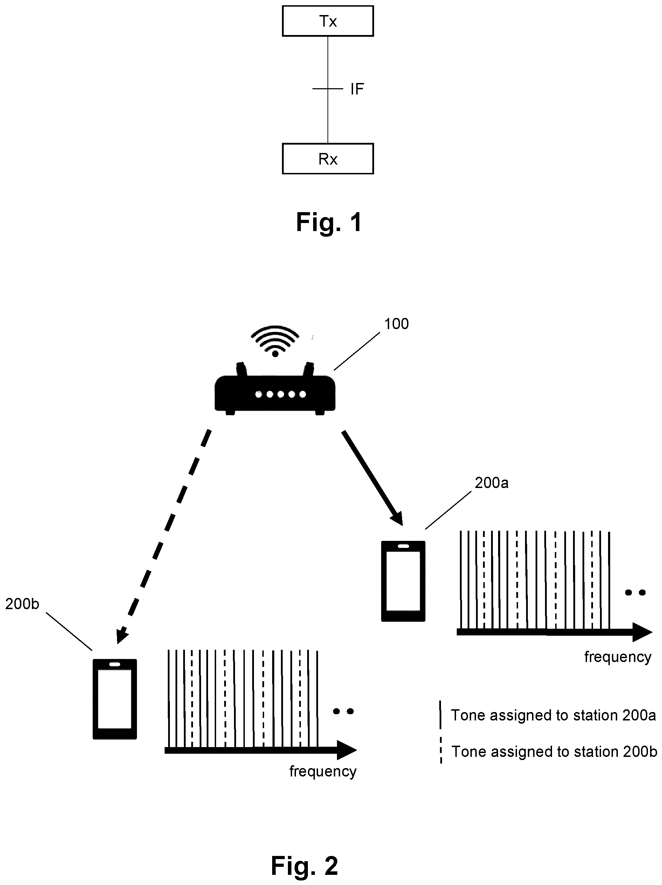

Fig. 1 illustrates an exemplary wireless system in which Tx represents a transmitter and Rx represents a receiver of a wireless signal. The transmitter Tx is capable of transmitting a signal to the receiver Rx or to a group of receivers or to broadcast a signal over an interface IF. The interface may be any wireless interface. The interface may be specified by means of resources, which can be used for the transmission and the reception by the transmitter Tx and the receiver Rx. Such resources may be defined in one or more (or all) of the time domain, frequency domain, code domain, and space domain. It is noted that in general, a "transmitter" and a "receiver" may be also both integrated in the same device. In other words, the devices Tx and Rx in Fig. 1 may respectively also include the functionality of the Rx and Tx.

The present disclosure is not limited to any particular transmitter Tx, receiver Rx and/or interface IF implementation. However, it may be applied readily to some existing communication systems as well as to the extensions of such systems, or to new communication systems. Exemplary existing communication systems may be, for instance, the 5G New Radio (NR) in its current or future releases, and/or the IEEE 802.11 based systems such as the recently studied IEEE 802.11 be or the like. The wireless signal is not necessarily a communication signal in the sense that it does not necessarily carry out human or machine communication. It may be a sensing signal such as radar signal or sounding signal or any other kind of wireless signal. The communication signal may be a signal for communication and sensing (Joint Communication & Sensing).

The IEEE 802.11, commonly referred to as Wi-Fi, has been around for three decades and has become arguably one of the most popular wireless communication standards with billions of devices supporting more than half of the worldwide wireless traffic. The increasing user demands in terms of throughput, capacity, latency, spectrum, and power efficiency calls for updates or amendments to the standard to keep up with them. As such, Wi-Fi generally has a new amendment after every 5 years with its own characteristic features. In the earlier generations, the focus was primarily on higher data rates, but with ever-increasing density of devices, area efficiency has become a major concern for Wi-Fi networks. Due to this issue, the last (802.11ax) and upcoming (802.11be) amendments have focused more on the efficiency issue.

In wireless local area networks (e.g. WLANs), resource units (RUs) are components of the frequency spectrum used to manage and optimize wireless communication. They are part of the IEEE 802.11ax standard, also known as Wi-Fi 6, which improves efficiency and performance in crowded environments. In 11ax, a resource unit (RU) that indicates grouped sub-carriers in a channel bandwidth of orthogonal frequency division multiple access (OFDMA), is assigned to each station (STA). Multiple RU (MRU) defined in 11be, however, enables the assignment of multiple RUs to an STA. This feature establishes several patterns of RU combinations, allowing for more flexible resource allocation.

In a traditional resource unit (in the following also denoted a regular resource unit, rRU), sub-carriers (also denoted as tones) are located adjacent to each other in the frequency domain within a block of a rRU. In other words, the sub-carriers in a rRU are located in a contiguous block within the channel bandwidth (in contrast to distributed-tone resource units, dRU, which are explained further below). That is, the sub-carriers are tightly grouped, and a data transmission may occur over the contiguous range of frequencies. Due to this configuration, the use of rRUs cannot address the above PSD problem in the 6 GHz band, since the concatenated tones fail to achieve a higher power boost per MHz due to the increased number of tones per MHz of bandwidth.

To address the stringent requirements, the use of distributed-tone RUs (dRUs) was proposed to enhance transmission power and extend coverage for 6 GHz LPI systems by overcoming the PSD limitations. In a dRU, the sub-carriers, or tones, are distributed over a wider BW, thereby reducing the number of tones per MHz and enabling a higher power boost. In other words, in dRUs, the sub-carriers/tones may be spread across the entire channel bandwidth in a non-contiguous manner. In this respect, it is to be noted that sub-carriers of a dRU may be located in between sub-carriers of another dRU (in frequency domain). For example, for a 52-tone dRU over 80 MHz (i.e. a dRU including 52 sub-carriers, which are spread across the bandwidth of 80 MHz), there is just one tone per MHz, but for a 52-tone rRU, there are about 13 tones per MHz. With PSD limitations as -1dBm/MHz in 6 GHz LPI bands, for 52-tone RU, using dRU can boost the transmit power by 11dB with respect to a rRU. This significant transmit power boost can enable a higher modulation and coding schemes (MCSs) or reach a longer range.

Several aspects of dRUs have been explored in the literature. These include the distribution bandwidth, dRU sizes, different operation modes, and the perspective of tone planning and pilot design. Different distribution bandwidths (DBW) have been proposed to be supported in dRU, such as 20 MHz, 40 MHz, 80 MHz, and other BWs, where different BWs support specific dRU sizes due to implementation & testing complexity issues. For example, for the distribution BW (DBW) of 20 MHz, only 26/52/106-tone dRU can be supported. This is because no distribution gain for a 242-tone dRU could be obtained on a BW of 20 MHz. Similarly, the DBW of 40 MHz supports 26/52/106/242-tone dRU, and for an 80 MHz bandwidth, 52/106/242/484-tone dRU will be supported. In the following Table 1, the relation between the RU size, distribution BW, and the associated power boosting with the size and BW is described:

**Table 1: Power boost achieved by the use of dRUs**

| **RU size** | **BW20** | | **BW40** | | **BW80** | |
|---|---|---|---|---|---|---|
| | #Tones/MHz | Power boost (dB) | #Tones/MHz | Power boost (dB) | #Tones/MHz | Power boost (dB) |
| **RU26** | 2 | 8.13 | 1 | 11.14 | 1 | 11.14 |
| **RU52** | 3 | 6.37 | 2 | 8.13 | 1 | 11.14 |
| **RU106** | 6 | 3.56 | 3 | 6.37 | 2 | 8.13 |
| **RU242** | n/a | n/a | 7 | 2.69 | 4 | 5.12 |
| **RU484** | n/a | n/a | n/a | n/a | 7 | 2.69 |
| **RU996** | n/a | n/a | n/a | n/a | n/a | n/a |
| **RU2x996** | n/a | n/a | n/a | n/a | n/a | n/a |

Moreover, several operation modes have also been taken into consideration from the perspective of dRU, such as simple mode and hybrid mode. In addition to that, punctured mode, which is caused by OBSS (Overlapping Basic Service Set) interference and in-device co-existence interference is also considered in the dRU. It should be noted that the tones in a dRU are allocated based on distribution bandwidth with the primary aim of enhancing power.

In the case of a simple mode, a dRU is distributed over the entire BW to maximize the transmit power. On the other hand, the hybrid mode supports the mixture of dRU and rRU. Particularly, it is important to support a hybrid of dRU and rRU in a larger BW to achieve higher throughput, better spectral efficiency, and backward compatibility with Wi-Fi 6/7. Hybrid mode is only for 160 MHz and 320 MHz BW and the minimum size of rRU in hybrid mode in 160/320MHz PPDU will be 242. In addition to that, punctured mode, which is employed to use the bandwidth efficiently in the presence of interference caused by Overlapping Basic Service Set (OBSS) interference and in-device co-existence interference, is also considered in the dRU. For instance, in a punctured 80 MHz subblock, the only allowed distribution BWs are 20 MHz and 40 MHz. Note that the dRU will not be allowed to distribute over 20+40 MHz=60 MHz. Moreover, within the punctured 80 MHz subblock, mixed-dRU/rRU transmission will not be supported, i.e. either dRU or rRU is transmitted in each 20 and 40 segment.

The rRU, which has been extensively explored in the literature, fails to overcome the power spectral density issue in the LPI mode of a Wi-Fi network, due to the fact that the tones in the rRU are contiguous and cannot achieve the higher power boost.

Further, the dRUs explored in literature may allow for fixed power boosting. However, there is still room for improvement.

The present disclosure aims at improving power boosting in wireless communication networks. In particular, but not limited thereto, the present disclosure aims at overcoming PSD limitations in 6 GHz LPI mode, wherein the transmit power may be enhanced, and therefore the spectrum efficiency is improved and/or the range is extended.

Whereas an approach using dRU as described in the literature might overcome some limitations by decreasing the number of tones per MHz, the present disclosure approaches this goal considering the requirements of a wireless communication entity and other aspects. Therefore, the present disclosure offers a new perspective on utilizing the dRU by incorporating 'Range', QoS requirements (e.g. latency, reliability, throughput, connectivity), and/or individual user/device capabilities (e.g. number of antennas, processing capabilities, limit of the transmission power, limits on the power saving modes) under various DBW, sizes and dRU configurations. Specifically, tones may be arranged within a dRU to allow for adaptive power boosting. Additionally, smaller dRUs may be combined into larger ones, ensuring the above criteria. For example, users close to the AP may receive more tones per MHz as they require less power boost, while users further from the AP may receive fewer tones per MHz to maximize the power boost. This might result in an adaptive power boost that aligns with user requirements. In addition to this, the proposed approach may be applied to different operation modes such as hybrid mode, punctured, and/or tone-switching mode. Also, it supports the loT devices in all the BW and supports multi-link operation (MLO) as well.

This general approach of the present disclosure will become clearer in the following description of specific embodiments.

Fig. 2 illustrates a system model of a wireless communication system, to which embodiments of the present disclosure may be applied. In the illustrated system, two stations 200a, 200b (examples of wireless communication entities) communicate with an access point 100 in the 6 GHz band operating under the IEEE 802.11 protocol.

In this respect, it is again noted that the present disclosure is not limited to said standard or any other specific implementation of a wireless communication system. Further, each of the wireless communication entities may be any wireless communication apparatus like a mobile station, an loT device, a multi-link device or the like, provided that the wireless communication entity may communicate with the access point in a wireless manner.

The communication network and, in particular, the wireless communication entities and the AP may support various channel bandwidths, including, for example, 20 MHz, 40 MHz, 80 MHz, or other bandwidths. Each wireless communication entity 200a, 200b can operate across any frequency within the assigned channel bandwidth. The total bandwidth is partitioned into a plurality of sets of orthogonal sub-carriers, referred to as distributed-tone-resource units, dRUs. The sub-carriers are also referred to as tones. It goes without saying that channels with a larger bandwidth (e.g. 80 MHz) may contain more dRUs compared to a channel having a smaller bandwidth (e.g. 20 MHz). Each dRU may consist of a specific number of sub-carriers or tones, which may be 26, 52, 106, 242, 484, 966, or 2 times 996 sub-carriers/tones. There may be a minimum number of tones for a dRU, like in the OFDMA specification, according to which a resource unit has to comprise at least 26 sub-carriers. However, the present disclosure is not necessarily limited to this requirement, and a resource unit may contain less than 26 tones. If there is a minimum number of tones, a resource unit including said minimum number of tones may be referred to as a "smallest resource unit".

According to the IEEE 802.11 specification, dRUs may be combined to form new dRUs. That is, a larger dRU (a dRU including more tones) may be formed by combining two or more smaller dRUs (dRUs including less tones). However, said merging of resource units is not necessarily arbitrary.

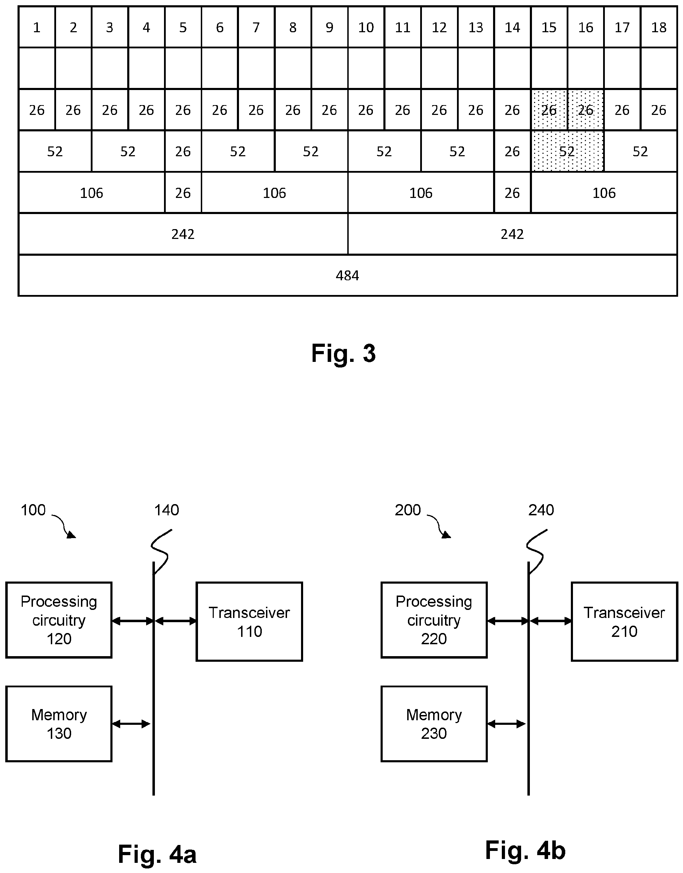

FIG. 3 shows a high-level resource unit formation in a 40 MHz channel for dRU or rRU. In the given bandwidth, a total of 18 dRUs (or rRUs) are included, wherein each RU includes 26 tones. In the figure, identifiers of said 26-RUs is given in the first row. The third row indicates the number of sub-carriers included in respective 26-RUs. Some of the RUs may be combined in order to form a larger RU. In the fourth to seventh row, the merging of certain lower level RUs is illustrated together with an indication of respective resulting number of sub-carriers included in the combined RUs. For example, 26-dRU 15 and 26-dRU16 (illustrated in a shaded manner) may be combined so as to form a larger dRU containing 52 tones (also illustrated in a shaded manner). Further, an even larger dRU may be obtained by combining, for instance, 26-dRUs 15, 16, 17, and 18, resulting in a dRU including 106 tones. A dRU including 242 tones may be obtained by combining 26-dRUs 10 to 18, and a dRU including 484 tones may be obtained by combining all 26-dRUs 1 to 18. According to the above, a larger dRU may be split into two or more smaller dRUs. In OFDMA, multi-user transmissions may be achieved by splitting the whole channel into several smaller dRUs.

For transmissions, the wireless communication entities (e.g. stations) are assigned with the dRUs to be used for communication. Subsequently, all wireless communication entities may start respective transmissions simultaneously using the assigned dRUs.

According to the present disclosure, the dRUs are assigned to the wireless communication entities considering a range (e.g. a distance from the wireless communication entity to the access point), Quality of Service (QoS) requirements, and/or characteristics of the wireless communication entity. In the example illustrated in Fig. 2, the dRUs are assigned to the two wireless communication entities 200a, 200b based on their respective range/distance to the access point 100. As illustrated in the graphics showing the distribution of the tones across the spectrum and respective association with the wireless communication entities 200a, 200b, a first wireless communication entity 200a whose distance to the access point 100 is lower than the distance of a second wireless communication entity 200b is provided with more tones, i.e. a dRU exhibiting a higher density of tones (tones/unit bandwidth, e.g. tones/MHz) than the second wireless communication entity 200b. With this approach, for example, the second wireless communication entity 200b achieves a higher power boost, since less tones are assigned within a certain unit bandwidth, allowing the wireless communication entity 200b to transmit with a higher signal power without excessively increasing the power density.

FIGs. 4a and 4b illustrate block diagrams showing a configuration of an access point 100 and a wireless communication entity 200, respectively, according to an embodiment.

The access point, AP, 100 comprises a transceiver 110 configured to transmit a trigger frame including scheduling information to a wireless communication entity 200. The transceiver 110 is further configured to receive a message from the wireless communication entity 200, for determining a range from the wireless communication entity 200 to the AP 100, entity characteristics, and/or Quality of Service, QoS, requirements. The AP 100 further comprises processing circuitry 120 configured to determine the range, the entity characteristics, and/or the QoS requirements using the message received from the wireless communication entity 200. The processing circuitry 120 further determines a distributed-tone resource unit, dRU, including a plurality of sub-carriers distributed over a bandwidth, according to the determined range, entity characteristics, and/or QoS requirements. The transceiver 110 is further configured to transmit a dRU indication indicating the dRU to the wireless communication entity 200.

The AP 100 may, for example, comprise a memory 130 for storing data, programs, and the like. For example, the memory 130 stores a program read by the processing circuitry 120, wherein the program, when executed by the processing circuitry 120, causes the processing circuitry 120 to perform respective operations. For example, the program may cause the processing circuitry 120 to perform above-described determinations and control the transceiver 110 to perform respective operations.

The transceiver 110, the processing circuitry 120, and/or the memory 130 may communicate with each other via communication interface 140.

The AP 100 may be a wireless access point (WAP), a hotspot, a network node, a connection point, a Wi-Fi hub, or the like. The AP 100 may be a Wi-Fi-Router, a standalone access point, a Mesh access point, or the like.

The wireless communication entity 200 comprises a transceiver 210 configured to receive the trigger frame including scheduling information from an access point, AP, 100. The transceiver 210 further transmits a message to the AP 100, for determining a range from the wireless communication entity 200 to the AP 100, entity characteristics, and/or Quality of Service, QoS, requirements, and receives a distributed-tone resource unit, dRU, indicator indicating a dRU from the AP 200, the dRU including a plurality of sub-carriers distributed over a bandwidth, according to the determined range, entity characteristics, and/or QoS requirements. The wireless communication entity 200 further comprises processing circuitry configured to control the transceiver 210 to communicate with the AP 100 using the indicated dRU.

The wireless communication entity 200 may, for example, comprise a memory 230 for storing data, programs, and the like. For example, the memory 230 stores a program read by the processing circuitry 220, wherein the program, when executed by the processing circuitry 220, causes the processing circuitry 220 to perform respective operations. For example, the program may cause the processing circuitry 220 to perform above-described determinations and control the transceiver 210 to perform respective operations.

The transceiver 210, the processing circuitry 220, and/or the memory 230 may communicate with each other via communication interface 240.

The wireless communication entity 200 may be a wireless device, a wireless terminal, a wireless module, a wireless node, a wireless interface, or the like. The wireless communication entity 200 may be a smartphone, a laptop, a Bluetooth device, a smartwatch, or the like.

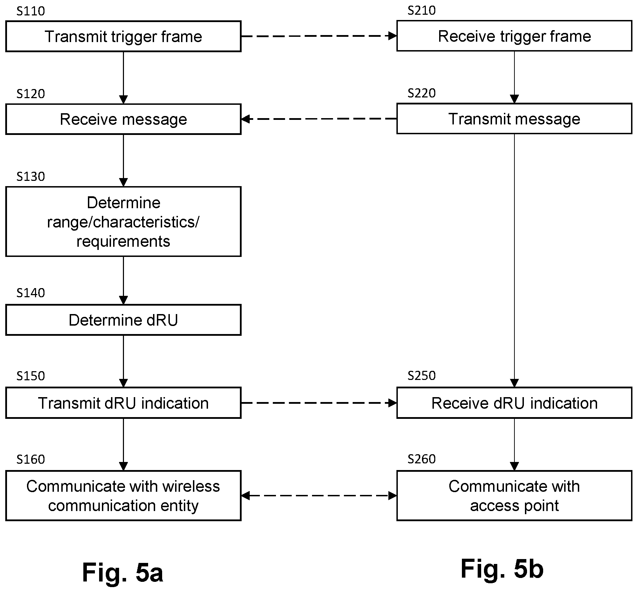

Fig. 5a illustrates the steps of a method for an access point 100 according to an embodiment and its interplay with the steps of a method for a wireless communication entity 200 as illustrated in Fig. 5b. Fig. 5b illustrates the steps of a method for a wireless communication entity 200 according to an embodiment and its interplay with the steps of a method for an access point 100 as illustrated in Fig. 5a.

In step S110, the AP 100 transmits a trigger frame including scheduling information to a wireless communication entity 200, which is received by the communication entity 200 in step S210. In step S220, the wireless communication entity 200 transmits a message for determining of a range from the wireless communication entity 200 to the AP 100, for determining entity characteristics, and/or for determining Quality of Service (QoS) requirements. The AP 100 receives said message in step S120 and determines in step S130 the range, the entity characteristics and/or the QoS requirements using the message received from the wireless communication entity 200. In step S140 the access point 100 determines a dRU including a plurality of sub-carriers distributed over a bandwidth, according to the determined range, entity characteristics, and/or QoS requirements and transmits a dRU indication indicating the dRU to the wireless communication entity 200 in step 150, which is received by the wireless communication entity 200 in step S250. In steps S160 and S260, the wireless communication entity 100 communicates with the access point 100 using the indicated dRU.

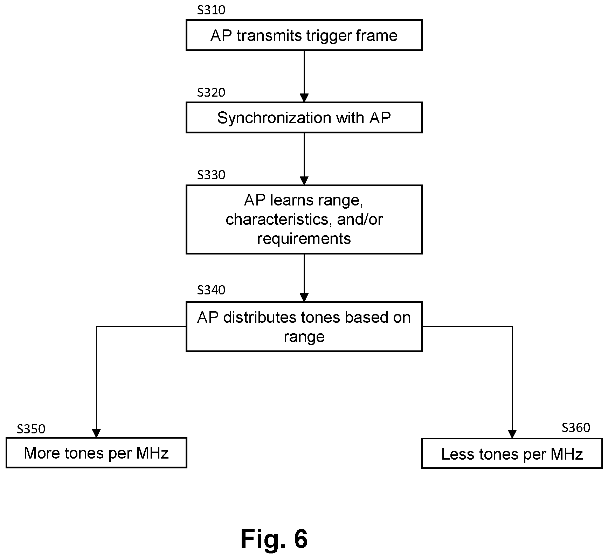

Fig. 6 illustrates the steps of a method according to a specific implementation of an embodiment. In the exemplary method, for instance, two wireless communication entities may be served by the access point, as illustrated in Fig. 2. However, the present disclosure is not limited thereto, and more than two or less than two wireless communication entities may be served.

During the initial access, the AP 100 transmits a trigger frame to all the wireless communication entities 200a, 200b based on respective channel parameters in step S310. The trigger frame may be a frame including transmission information, scheduling information, and/or other wireless channel parameters. All wireless communication entities 200a, 200b participating in the communication with the access point 100 synchronize using the trigger frame and may start transmissions simultaneously.

After this handshaking between the wireless communication entities 200a, 200b and the AP 100, the AP 100 learns about the QoS parameters, range and/or entity characteristics of the associated wireless communication entities 200a, 200b. To obtain these metrics, the AP 200 may depend on existing mechanisms, such as stream classification service (SCS), which classifies incoming MAC service data units (MSDUS) based on parameters provided by the non-AP stations (wireless communication entities) and/or characterize the traffic characteristics. Furthermore, other parameters may specify the features and QoS requirements of a traffic flow. Examples include the minimum data rate, delay bound, burst size, min/max service interval, MSDU delivery ratio, and so on. A QoS characteristics element may be included in frames exchanged during SCS negotiation. Based on those parameters, the AP 100 may perform the tone distribution for all wireless communication entities 200a, 200b, i.e. determine a dRU for all wireless communication entities 200a, 200b to have sufficient power boost for all the users.

In the specific example illustrated in Fig. 6, the AP 100 determines the range of the wireless communication entity/entities 200a, 200b and, based thereon, determines a dRU for each of the wireless communication entities 200a, 200b. For example, in step S340, the dRUs are determined using the ranges of the wireless communication entities 200a, 200b to the AP 200. A wireless communication entity 200b exhibiting a comparably large range may be provided with a dRU having less tones per MHz in step S360, whereas a wireless communication entity 200a exhibiting a lower range to the AP may be provided with a dRU having more tones per MHz. With this approach, the power boost may be matched with the user requirements.

That is, according to the embodiment described with reference to FIG. 6, the processing circuitry 120 of the AP 100 is configured to determine a dRU having a lower number of sub-carriers per unit frequency the larger the range from the AP 100 to the wireless communication entity 200.

However, the present disclosure is not limited to this particular implementation, and the determination of a dRU and, for example, the number of tones per unit frequency (e.g. MHz) may be determined based on entity characteristics. The entity characteristics may include at least one of a number of antennas of the wireless communication entity 200, processing capabilities of the wireless communication entity 200, a transmission power limitation of the wireless communication entity 200, and power saving mode limitations of the wireless communication entity 200.

Further, the dRU and, for example, the number of tones per unit frequency may be determined based on the QoS requirements of the wireless communication entity 200. The QoS requirements may include at least one of a communication latency requirement, a reliability requirement, a throughput requirement, and a connectivity requirement.

For example, the processing circuitry 120 of the AP 100 may be configured to determine a dRU having a lower number of sub-carriers per unit frequency the larger a throughput requirement of the wireless communication entity 200 is.

That is, a higher throughput requirement leads to fewer tones per MHz. This is because high throughput requires more power to keep the error probability within a specific range. Therefore, increased power may be advantageous in case of a high throughput requirement, and, as power increases, the number of tones per MHz decreases.

For example, the processing circuitry 120 of the AP 100 may be configured to determine a dRU having a lower number of sub-carriers per unit frequency the larger a reliability requirement of the wireless communication entity 200 is.

Once the wireless communication entity 200 is required to be served with higher reliability, this may result in a minimum error in the received messages. To have a minimum error in the received message, it may be advantageous to have higher power to transmit. A higher transmission power may be achieved by having fewer tones/Mhz to be assigned to the wireless communication entity 200, in order not to increase the power density excessively.

For example, the processing circuitry 120 of the AP 100 may be configured to determine a dRU having a lower number of sub-carriers per unit frequency, the larger a number of antennas of the of the wireless communication entity 200 is.

One of the goals of having more antennas in the wireless communication entity 200 may be to have a higher diversity, and a higher diversity might result in less error probability at the receiver side. For a reduced error probability, it is advantageous to have a higher power boosting, which may be achieved by assigning less tones per MHz.

On the other hand, for example, the processing circuitry 120 of the AP 100 may be configured to determine a dRU having a higher number of sub-carriers per unit frequency, the larger a number of antennas of the of the wireless communication entity 200 is.

This is due to a different goal of having more antennas in the wireless communication entity 200, namely achieving a higher multiplexing gain, which results in a reduced interference between wireless communication entities. For reduced interference, lower power boosting may be advantageous. Therefore, in order to reduce interference between communication entities 200, the AP 100 may determine a higher number of tones per MHz, the higher the number of antennas is.

Further, another goal of having more antennas in a wireless communication entity 200 is to have a higher reliability and higher reliability means less error probability at the receiver side. And since the antennas may be independent from each other, less error probability could be achieved with lower power boosting. Lower power boosting may be achieved by assigning a larger number tones/Mhz to the wireless communication entity 200.

For example, the processing circuitry 120 of the AP 100 may be configured to determine a dRU having a lower number of sub-carriers per unit frequency, the lower a latency requirement of the wireless communication entity 200 is.

Once a wireless communication entity 200 is required to be served with lower latency, the communication entity 200 is to be served with higher reliability. Higher reliability requires a minimum error in the received messages, which may be achieved with a higher power boost in the transmission. Such a higher power boost may be achieved with a lower number of tones per MHz scheduled for the wireless communication entity 200.

As described above, the AP 100 may determine, for each of a plurality of wireless communication entities 200, a dRU according to respective ranges, QoS requirements and/or entity characteristics. That is, the transceiver 110 may be configured to receive a message from each of a plurality of wireless communication entities 200, for determining, for each of the respective wireless communication entities 200, a range from the wireless communication entity 200 to the AP 100, entity characteristics, and/or QoS requirements. The processing circuitry 120 may be configured to determine the range, the entity characteristics and/or the QoS requirements, for each of the wireless communication entities 200, using the message received from the respective wireless communication entity. Further, the processing circuitry 120 may determine, for each of the wireless communication entities 200, a required power boost level according to the determined ranges, entity characteristics, and/or QoS requirements, and to determine, for each of the wireless communication entities 200, a dRU using the determined power boost levels.

The power boost level may be any measure that may be mapped to a corresponding dRU or a corresponding number of tones per MHz. For example, the power boost level may correspond to the range of a wireless communication entity 200 to the AP 100. Alternatively, the power boost level may reflect the QoS requirement and/or entity characteristics so as to allow an appropriate determination of a respective dRU. That is, the power boost level corresponds to an intended power boost, which is indirectly proportional to the number of tones per MHz.

For determining the power boost level for a determined range, QoS requirement and/or entitiy characteristic, the access point 100 may store an association relationship (e.g. in the form of a table or the like) that assigns a power level to each of ranges of distances, to QoS requirements and/or entity characteristics. Further, the access point 100 may determine the range/distance of a wireless communication entity 200 to the access point 100, to QoS requirements and/or entity characteristics of the wireless communication entity 200 as described above using known methods. In addition or alternatively, a wireless communication entity may transmit an indicator indicating a respective range, QoS requirement, and/or entity characteristic to the access point 100.

In the framework of the determination of the dRU based on the range, QoS requirements and/or the entity characteristics, the AP 200 may either select one of a plurality of dRUs included in the bandwidth (e.g. one of dRUs 1 to 18 in Fig. 3), or select and combine at least two of the plurality of dRUs included in the bandwidth. This selection may be performed according to the determined range, entity characteristics and/or QoS requirements.

For example, when selecting and combining the at least two of the plurality of dRUs, the processing circuitry 120 may be configured to select the at least two of the plurality of dRUs exhibiting a lower number of sub-carriers per unit frequency the larger the range from the AP 100 to the wireless communication entity 200.

For example, when selecting and combining the at least two of the plurality of dRUs, the processing circuitry 120 may configured to select the at least two of the plurality of dRUs based on the entity characteristics and/or the QoS requirements.

In this framework, the selection of a combined dRU corresponds to a selection of a dRU having a larger number of tones per MHz. However, when a combined dRU is to be determined, e.g. in order to provide a higher number of tones per MHz while, at the same time, the power boost should be maintained at a high level as far as possible, from among the dRUs (e.g. dRUs 1 to 18 in FIG. 3), the dRUs whose sub-carriers exhibit the highest distance (in frequency domain) may be selected for the combined dRU.

For example, a wireless communication entity 200 exhibiting a larger range/distance to the AP 100 may be assigned a dRU including 26 tones (also referred to as 26-dRU). In this case, a high power boost may be achieved due to a small number of tones per MHz. However, a wireless communication entity 200 having a larger range/distance to the AP 100 may be assigned a combined dRU including 52 tones (also referred to as 52-dRU). However, in order to achieve a high power boost, the 52-dRU may be formed using two 26-dRUs that exhibit a highest distance of respective tones (in the frequency domain).

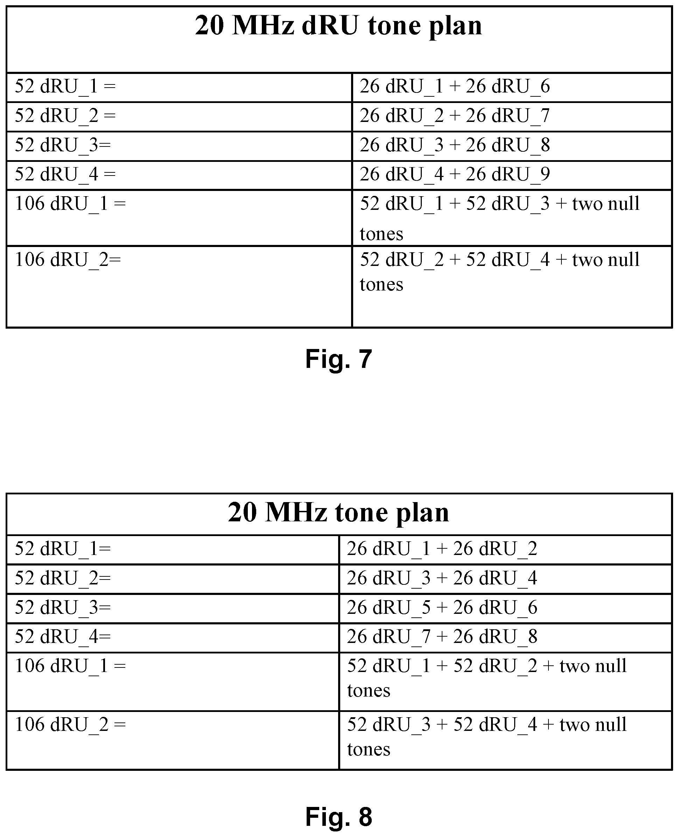

FIG. 7 illustrates such a combination of dRUs for a wireless communication entity 200 at a further range in a 20 MHz bandwidth. For example, a first 52-dRU (52-dRU_1) may be formed by combining 26-dRU_1 (the dRU including 26 sub-carriers indicated with no. 1, e.g. in Fig. 3) and 26-dRU_6. Said 26-dRUs exhibit a large distance in frequency domain between respective tones and, accordingly, their combination allows for a high power boost. Further, for example, 52-dRU_2 may be formed by combining 26-dRU_2 and 26-dRU_7, 52-dRU_3 may be formed by combining 26-dRU_3 and 26-dRU_8, and 52-dRU_4 may be formed by combining 26-dRU_4 and 26-dRU_9. Similarly, 106-dRU_1 may be formed by combining 52-dRU_1, 52-dRU_3 and two null tones, and 106-dRU_2 may be formed by combining 52-dRU_2, 52-dRU_4 and two null tones. In addition to these sizes, the other sizes such as 106-dRU, 242-dRU, 484-dRU, and 996-dRU are also applicable according to the present disclosure.

In a second case, for a (comparably) near wireless communication entity 200, more tones / MHz may be assigned to give power boost according to its closeness from AP 200. In the case of 52 and 106 size dRU, those 26 and 52 dRUs may be combined that have a minimum distance of respective tones in frequency domain.

FIG. 8 illustrates such a combination of dRUs for a wireless communication entity 200 at a nearer range in a 20 MHz bandwidth. In contrast to the example provided in FIG. 7, a combined 52-dRU_1 may be obtained by combining 26-dRU_1 and 26_dRU_2, 52-dRU_2 may be obtained by combining 26-dRU_3 and 26-dRU_4, and so on. Further, 106-dRU_1 may obtained by combining 52-dRU_1, 52-dRU_2 and two null tones, and so on. In addition to these two sizes, the other sizes such as 242-dRU, 484-dRU, and 996-dRU are also applicable according to the present disclosure.

The approach of the present disclosure may be applied to multiple aspects, such as supporting loT devices, supporting hybrid, punctured and on-off-modes.

Regarding loT devices, it is to be noted that, according to the literature, utilizing a higher BW channel does not support loT. However, the present disclosure may support loT devices, because 20 MHz is available in every channel, regardless of the bandwidth of the channel being used. This may be achieved by splitting a higher bandwidth into smaller bandwidth sections based on the requirement. For example, in case of an 80 MHz bandwidth, to support loT devices, the bandwidth may be split into two sections of 40MHz each. Then, one 40 MHz bandwidth may be split into two 20 MHz bandwidth sections to support the loT devices, and the remaining 40 MHz bandwidth may be maintained for support of other devices. However, the distribution inside the sections may be based on the approach of the present disclosure that accounts for the range, QoS requirements and/or entity characteristics.

Further, in a so-called hybrid mode, a larger bandwidth (e.g. 160 MHz and 320 MHz) may support both rRU and dRU at the same time. When applying the approach of the present disclosure to a hybrid mode, it may be first determined whether a rRU should be assigned to a wireless communication entity 200, based on the range, QoS requirements and/or entity characteristics. Further, if a dRU is to be determined, the dRU may be determined based on the range, QoS requirements and/or entity characteristics.

That is, the processing circuitry 120 may be configured to determine either the dRU or a regular resource unit, rRU, including a plurality of sub-carriers adjacent to each other, according to the determined range, entity characteristics, and/or QoS requirements.

Further, a puncturing mode may be supported. A puncturing mode, e.g. in WLAN, allows devices to avoid interference by using only clean portions of a wider channel, skipping unusable sections. This maximizes bandwidth efficiency, maintaining higher data rates even when parts of the channel are congested or blocked. The same puncturing mode is applicable to the approach of the present disclosure. That is, the dRU can be designed in portions for punctured mode based on the proposed algorithm. Moreover, the approach can support both the dynamic and static puncturing which are features of Wifi-7.

Further, On/Off-mode may be supported. According to an On/Off-mode, tones are switched on or off in order to minimize the number of sub-carriers to increase the power boost. The flexibility of embodiments of the present disclosure allows for turning the tones on and off, based on the QoS requirements, entity characteristics and/or range. For instance, for a wireless communication entity 200 closer to the AP 100, the tones could be ON since a lower power boost is required. On the other hand, for the far wireless communication entity, some of the tones could be turned OFF to have a maximum power boost.

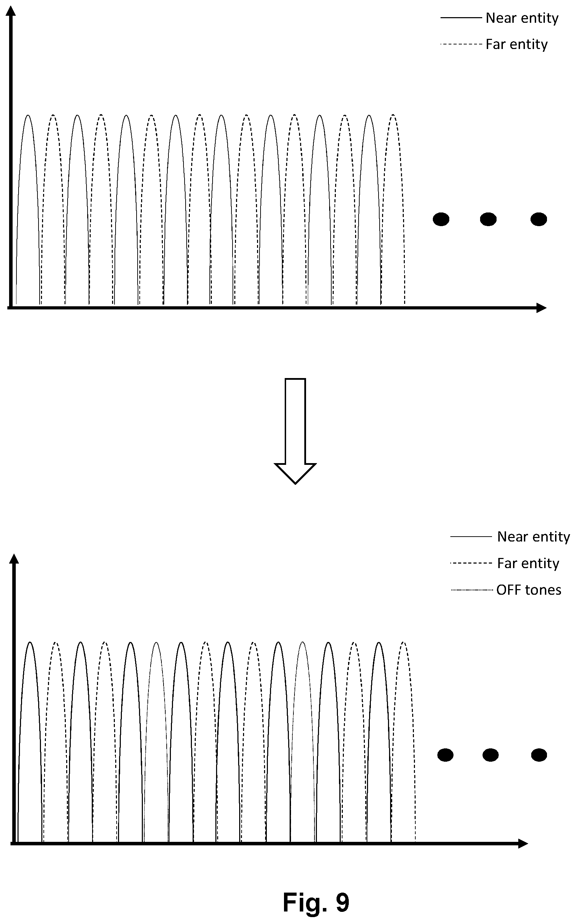

FIG. 9 illustrates an embodiment supporting an ON/OFF approach. In the upper portion of the figure, illustrating a comparative example, a dRU is assigned to a far entity and to a near entity, irrespective of the range of the entity from the AP. The graph illustrates the locations of the tones of the dRUs assigned to the entities, which are spread across the spectrum (horizontal axis indicates the frequency).

On the lower portion, to the contrary, the distances of the wireless communication entities 200 to the AP 100 is taken into account by the AP 100. In order to provide the far entity 200 with a higher power boost, some of the tones (that are on in the comparative example) included in a dRU assigned to the far entity 200 are switched off. Thereby, the number of toned/MHz is reduced and a higher signal boost may be achieved. In this way, the ON/OFF mode known from the literature, in which some tones are disabled for all the users without considering their range and requirements, may be adjusted such that a power boost is achieved for each communication entity based on respective range, QoS requirement, and/or entity characteristics.

It goes without saying that said on/off switching of tones is not limited to being based on the range from the wireless communication entity 200 to the AP 100, but may be based on any other measure as detailed further above in relation with the selection of dRUs, i.e. QoS requirements and/or entity characteristics.

That is, the processing circuitry 120 of the access point 100 may be further configured to determine a subset of sub-carriers included in the determined dRU according to the determined range, entity characteristics, and/or QoS requirements, wherein the dRU indication further indicates the subset of sub-carriers as not to be used for communication with the AP 100 by the wireless communication entity 200.

Further, for example, the approach of the present disclosure may also support MLO devices (multi-link operation devices, also referred to as MLDs). MLO in Wi-Fi allows devices to simultaneously connect and transmit data over multiple frequency bands (e.g., 2.4 GHz, 5 GHz, or 6 GHz). This improves performance, reducing latency, increasing throughput, and enhancing network reliability by dynamically managing traffic across different links.

An MLD is a logical entity with several affiliated wireless communication entities, one MAC data service, and a single MAC service access point (SAP) to the logical link control (LLC). The advantages of MLO operation include higher peak throughput, lower latency, traffic shaping, and power savings. The hybrid mode can be supported in the MLO in a way that it will support different applications such as 2.4 GHz and 5 GHz will support rRU and 6GHz will support dRU. In this way, different applications based on the users' requirements considering MLO configurations such as Multi-Link Multi-Radio (MLMR) modes, Simultaneous Transmit and Receive (STR) mode, Non-STR (NSTR) mode, Enhanced Multi-Link Single Radio (MLSR) modes.

Further, it is to be noted that the approach of the present disclosure may be equally applied to joint communication and sensing use cases.

Still further, for determining the dRU based on the range, QoS requirements, and/or entity characteristics, a machine learning algorithm/artificial intelligence algorithm may be applied. That is, a machine learning system may be trained using ranges, WoS requirements, and/or entity characteristics of one or more wireless communication entities with respective labels and used by the access point 100 for determination of the dRU.

### Advantages achieved by the present disclosure

According to the present disclosure, adaptive power boosting may be performed, which is tailored to requirements of the wireless communication entities. For example, wireless communication entities closer to the AP may receive more tones per MHz since they require less power boost, but wireless communication entities farther away from the AP may receive fewer tones per MHz to maximize the power increase. This may result in an adjustable power boost that corresponds to user demand. This method optimizes power allocation based on specific user demands, improving system performance while ensuring compliance with power regulations essential in wireless communication standards.

Further, based on the present disclosure, a wireless communication entity far away from the AP or base station consume power based on their location, QoS requirements (latency, reliability, throughput, connectivity), and individual user/device capabilities (number of antennas, processing capabilities, limit of the transmission power, limits on the power saving modes). Therefore, the present disclosure addresses a near-far dilemma and may achieve user fairness, since particularly in the uplink direction there is less interference among communication entities. Moreover, the approach promotes green communication by providing sufficient power boost based on user requests and requirements, which may improve the system's energy efficiency.

The suggested solution may supports loT devices because 20 MHz bandwidth may be provided in every scenario, regardless of the BW of the channel being used. According to the literature, utilizing a higher BW channel does not support loT.

Still further, the proposed algorithm can be adaptively scaled to support different bandwidths (20MHz, 40MHz, 80MHz, 160 MHz, 320 MHz) and different dRU sizes (26, 52, 106, 242, 484, 996).

In addition, the proposed approach may allow for a hybrid mode, in which both rRU and dRU are available to serve wireless communication entities. Specifically, the proposed technique may assist the operator in two steps: assisting in the decision-making process for the selection approach according to the requirements, and then dispersing the tones using the proposed approach.

Moreover, the suggested algorithm can be implemented in a way that may allow for punctured mode. Furthermore, our suggested strategy can also support both dynamic and static puncturing that has been used in Wi-Fi7.

The proposed approach also supports the ON/OFF mode proposed in literature in a modified manner. Particularly, based on the QoS requirements, range and/or entity characteristics of the wireless communication entity, tones may be enabled or disabled (switched on or off).

The flexibility of the proposed approach enables the support of MLO in such a way that for the 2.4 GHz and 5 GHz links, rRU will be used. However, for the 6 GHz link, dRU may be used. More specifically, MLO and hybrid mode may be combined to provide better performance.

The proposed approach is compatible to any tone plan that has been proposed in the literature such as group-based method, the perfectly uniform distribution method, and the 26-tone RU-based method, etc.

### Implementations in software and hardware

The methodologies described herein may be implemented by various means depending on the application. For example, these methodologies may be implemented in hardware, operation system, firmware, software, or any combination of two or all of them. For a hardware implementation, any processing circuitry may be used, which may include one or more processors.

For example, the hardware may include one or more of application-specific integrated circuits (ASICs), digital signal processors (DSPs), digital signal processing devices (DSPDs), programmable logic devices (PLDs), field-programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer-readable storage medium or any other type of storage. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc, or the like. Combinations of different storage media are also possible - in other words, distributed and heterogeneous storage may be employed.

The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

### Selected embodiments and examples

Summarizing, apparatuses, methods and techniques are described for adaptive power boosting in wireless communication networks, making use of distributed-tone resource units determined based on a range, QoS requirement and/or characteristics of a wireless communication entity.

According to a first aspect, provided is an access point, AP, comprising a transceiver configured to transmit a trigger frame including scheduling information to a wireless communication entity; to receive a message from the wireless communication entity, for determining a range from the wireless communication entity to the AP, entity characteristics, and/or Quality of Service, QoS, requirements; and processing circuitry configured to determine the range, the entity characteristics, and/or the QoS requirements using the message received from the wireless communication entity; to determine a distributed-tone resource unit, dRU, including a plurality of sub-carriers distributed over a bandwidth, according to the determined range, entity characteristics, and/or QoS requirements, wherein the transceiver is configured to transmit a dRU indication indicating the dRU to the wireless communication entity.

In an embodiment, the processing circuitry is configured to determine a dRU having a lower number of sub-carriers per unit frequency the larger the range from the AP to the wireless communication entity.

In an embodiment, the entity characteristics include at least one of a number of antennas of the wireless communication entity, processing capabilities of the wireless communication entity, a transmission power limitation of the wireless communication entity, and power saving mode limitations of the wireless communication entity.

In an embodiment, the QoS requirements include at least one of a communication latency requirement, a reliability requirement, a throughput requirement, and a connectivity requirement.

In an embodiment, the transceiver is configured to receive a message from each of a plurality of wireless communication entities, for determining, for each of the respective wireless communication entities, a range from the wireless communication entity to the AP, entity characteristics, and/or QoS requirements; and the processing circuitry is configured to determine the range, the entity characteristics and/or the QoS requirements, for each of the wireless communication entities, using the message received from the respective wireless communication entity; to determine, for each of the wireless communication entities, a required power boost level according to the determined ranges, entity characteristics, and/or QoS requirements; and to determine, for each of the wireless communication entities, a dRU using the determined power boost levels.

For example, the processing circuitry is configured to determine the dRU by selecting one of a plurality of dRUs included in the bandwidth, or selecting and combining at least two of the plurality of dRUs included in the bandwidth, according to the determined range, entity characteristics, and/or QoS requirements.

For example, when selecting and combining the at least two of the plurality of dRUs, the processing circuitry is configured to select the at least two of the plurality of dRUs exhibiting a lower number of sub-carriers per unit frequency the larger the range from the AP to the wireless communication entity.

For example, when selecting and combining the at least two of the plurality of dRUs, the processing circuitry is configured to select the at least two of the plurality of dRUs based on the entity characteristics and/or the QoS requirements.

In an embodiment, the processing circuitry is further configured to determine a subset of sub-carriers included in the determined dRU according to the determined range, entity characteristics, and/or QoS requirements; and the dRU indication further indicates the subset of sub-carriers as not to be used for communication with the AP by the wireless communication entity.

In an embodiment, the processing circuitry is configured to determine either the dRU or a regular resource unit, rRU, including a plurality of sub-carriers adjacent to each other, according to the determined range, entity characteristics, and/or QoS requirements.

For example, the AP is configured to operate in a 6 GHz band of a wireless local area network, WLAN.

According to a second aspect, provided is a wireless communication entity, comprising a transceiver configured to receive a trigger frame including scheduling information from an access point, AP; to transmit a message to the AP, for determining a range from the wireless communication entity to the AP, entity characteristics, and/or Quality of Service, QoS, requirements; and to receive a distributed-tone resource unit, dRU, indicator indicating a dRU from the AP, the dRU including a plurality of sub-carriers distributed over a bandwidth, according to the determined range, entity characteristics, and/or QoS requirements; and processing circuitry configured control the transceiver to communicate with the AP using the indicated dRU.

In an embodiment, the entity characteristics include at least one of a number of antennas of the wireless communication entity, processing capabilities of the wireless communication entity, a transmission power limitation of the wireless communication entity, and power saving mode limitations of the wireless communication entity.

In an embodiment, the QoS requirements include at least one of a communication latency requirement, a reliability requirement, a throughput requirement, and a connectivity requirement.

In an embodiment, the wireless communication entity is configured to operate in a 6 GHz band of a wireless local area network, WLAN.

According to a third aspect, provided is a method for an access point, AP, comprising transmitting a trigger frame including scheduling information to a wireless communication entity; receiving a message from the wireless communication entity, for determining a range from the wireless communication entity to the AP, entity characteristics, and/or Quality of Service, QoS, requirements; determining the range, the entity characteristics and/or the QoS requirements using the message received from the wireless communication entity; determining a distributed-tone resource unit, dRU, including a plurality of sub-carriers distributed over a bandwidth, according to the determined range, entity characteristics, and/or QoS requirements; and transmitting a dRU indication indicating the dRU to the wireless communication entity.

In an embodiment, a dRU having a lower number of sub-carriers per unit frequency, the larger the range from the AP to the wireless communication entity is determined.

In an embodiment, the entity characteristics include at least one of a number of antennas of the wireless communication entity, processing capabilities of the wireless communication entity, a transmission power limitation of the wireless communication entity, and power saving mode limitations of the wireless communication entity.

In an embodiment, the QoS requirements include at least one of a communication latency requirement, a reliability requirement, a throughput requirement, and a connectivity requirement.

In an embodiment, the method comprises receiving a message from each of a plurality of wireless communication entities, for determining, for each of the respective wireless communication entities, a range from the wireless communication entity to the AP, entity characteristics, and/or QoS requirements; determining the range, the entity characteristics and/or the QoS requirements, for each of the wireless communication entities, using the message received from the respective wireless communication entity; determining, for each of the wireless communication entities, a required power boost level according to the determined ranges, entity characteristics, and/or QoS requirements; and determining, for each of the wireless communication entities, a dRU using the determined power boost levels.

In an embodiment, the dRU is determined by selecting one of a plurality of dRUs included in the bandwidth, or selecting and combining at least two of the plurality of dRUs included in the bandwidth, according to the determined range, entity characteristics, and/or QoS requirements.

For example, when selecting and combining the at least two of the plurality of dRUs, the at least two of the plurality of dRUs exhibiting a lower number of sub-carriers per unit frequency the larger the range from the AP to the wireless communication entity are selected.

For example, when selecting and combining the at least two of the plurality of dRUs, the at least two of the plurality of dRUs are selected based on the entity characteristics and/or the QoS requirements.

In an embodiment, the method comprises determining a subset of sub-carriers included in the determined dRU according to the determined range, entity characteristics, and/or QoS requirements; wherein the dRU indication further indicates the subset of sub-carriers as not to be used for communication with the AP by the wireless communication entity.

In an embodiment, the method comprises determining either the dRU or a regular resource unit, rRU, including a plurality of sub-carriers adjacent to each other, according to the determined range, entity characteristics, and/or QoS requirements.

In an embodiment, the transmissions and receptions are performed in a 6 GHz band of a wireless local area network, WLAN.

According to a fifth aspect, provided is a method for a wireless communication entity, comprising receiving a trigger frame including scheduling information from an access point, AP; transmitting a message to the AP, for determining a range from the wireless communication entity to the AP, entity characteristics, and/or Quality of Service, QoS, requirements; and receiving a distributed-tone resource unit, dRU, indicator indicating a dRU from the AP, the dRU including a plurality of sub-carriers distributed over a bandwidth, according to the determined range, entity characteristics, and/or QoS requirements; and communicating with the AP using the indicated dRU.

In an embodiment, the entity characteristics include at least one of a number of antennas of the wireless communication entity, processing capabilities of the wireless communication entity, a transmission power limitation of the wireless communication entity, and power saving mode limitations of the wireless communication entity.

In an embodiment, the QoS requirements include at least one of a communication latency requirement, a reliability requirement, a throughput requirement, and a connectivity requirement.

In an embodiment, the transmissions and receptions are performed in a 6 GHz band of a wireless local area network, WLAN.

According to a sixth aspect, provided is a computer program stored in a non-transitory, computer-readable medium, the program comprising code instructions which, when executed on one or more processors, cause the one or more processors to perform steps of any one of the methods described above.

Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

## Claims

1. An access point, AP, comprising
a transceiver configured to
transmit a trigger frame including scheduling information to a wireless communication entity;
receive a message from the wireless communication entity, for determining a range from the wireless communication entity to the AP, entity characteristics, and/or Quality of Service, QoS, requirements; and
processing circuitry configured to
determine the range, the entity characteristics, and/or the QoS requirements using the message received from the wireless communication entity;
determine a distributed-tone resource unit, dRU, including a plurality of sub-carriers distributed over a bandwidth, according to the determined range, entity characteristics, and/or QoS requirements, wherein
the transceiver is configured to transmit a dRU indication indicating the dRU to the wireless communication entity.

2. The AP according to claim 1, wherein
the processing circuitry is configured to determine a dRU having a lower number of sub-carriers per unit frequency the larger the range from the AP to the wireless communication entity.

3. The AP according to claim 1 or 2, wherein
the entity characteristics include at least one of a number of antennas of the wireless communication entity, processing capabilities of the wireless communication entity, a transmission power limitation of the wireless communication entity, and power saving mode limitations of the wireless communication entity.

4. The AP according to any one of claims 1 to 3, wherein
the QoS requirements include at least one of a communication latency requirement, a reliability requirement, a throughput requirement, and a connectivity requirement.

5. The AP according to any one of claims 1 to 4, wherein
the transceiver is configured to receive a message from each of a plurality of wireless communication entities, for determining, for each of the respective wireless communication entities, a range from the wireless communication entity to the AP, entity characteristics, and/or QoS requirements; and
the processing circuitry is configured to
determine the range, the entity characteristics and/or the QoS requirements, for each of the wireless communication entities, using the message received from the respective wireless communication entity;
determine, for each of the wireless communication entities, a required power boost level according to the determined ranges, entity characteristics, and/or QoS requirements; and
determine, for each of the wireless communication entities, a dRU using the determined power boost levels.

6. The AP according to any one of claims 1 to 5, wherein
the processing circuitry is configured to determine the dRU by
selecting one of a plurality of dRUs included in the bandwidth, or
selecting and combining at least two of the plurality of dRUs included in the bandwidth,
according to the determined range, entity characteristics, and/or QoS requirements.

7. The AP according to claim 6, wherein
when selecting and combining the at least two of the plurality of dRUs, the processing circuitry is configured to select the at least two of the plurality of dRUs exhibiting a lower number of sub-carriers per unit frequency the larger the range from the AP to the wireless communication entity.

8. The AP according to claim 6 or 7, wherein
when selecting and combining the at least two of the plurality of dRUs, the processing circuitry is configured to select the at least two of the plurality of dRUs based on the entity characteristics and/or the QoS requirements.

9. The AP according to any one of claims 1 to 8, wherein
the processing circuitry is further configured to determine a subset of sub-carriers included in the determined dRU according to the determined range, entity characteristics, and/or QoS requirements; and
the dRU indication further indicates the subset of sub-carriers as not to be used for communication with the AP by the wireless communication entity.

10. The AP according to any one of claims 1 to 9, wherein
the processing circuitry is configured to determine either the dRU or a regular resource unit, rRU, including a plurality of sub-carriers adjacent to each other, according to the determined range, entity characteristics, and/or QoS requirements.

11. The AP according to any one of claims 1 to 10, wherein
the AP is configured to operate in a 6 GHz band of a wireless local area network, WLAN.

12. A wireless communication entity, comprising
a transceiver configured to
receive a trigger frame including scheduling information from an access point, AP;
transmit a message to the AP, for determining a range from the wireless communication entity to the AP, entity characteristics, and/or Quality of Service, QoS, requirements; and
receive a distributed-tone resource unit, dRU, indicator indicating a dRU from the AP, the dRU including a plurality of sub-carriers distributed over a bandwidth, according to the determined range, entity characteristics, and/or QoS requirements; and
processing circuitry configured control the transceiver to communicate with the AP using the indicated dRU.

13. A method for an access point, AP, comprising
transmitting a trigger frame including scheduling information to a wireless communication entity;
receiving a message from the wireless communication entity, for determining a range from the wireless communication entity to the AP, entity characteristics, and/or Quality of Service, QoS, requirements;
determining the range, the entity characteristics and/or the QoS requirements using the message received from the wireless communication entity;
determining a distributed-tone resource unit, dRU, including a plurality of sub-carriers distributed over a bandwidth, according to the determined range, entity characteristics, and/or QoS requirements; and
transmitting a dRU indication indicating the dRU to the wireless communication entity.

14. A method for a wireless communication entity comprising
receiving a trigger frame including scheduling information from an access point, AP;
transmitting a message to the AP, for determining a range from the wireless communication entity to the AP, entity characteristics, and/or Quality of Service, QoS, requirements; and
receiving a distributed-tone resource unit, dRU, indicator indicating a dRU from the AP, the dRU including a plurality of sub-carriers distributed over a bandwidth, according to the determined range, entity characteristics, and/or QoS requirements; and
communicating with the AP using the indicated dRU.

15. A computer program stored in a non-transitory, computer-readable medium, the program comprising code instructions which, when executed on one or more processors, cause the one or more processors to perform steps of a method according to claim 13 or 14.
